# EUROPEAN PATENT SPECIFICATION

(11) **EP 3 462 100 B1**
(45) Date of publication and mention of the grant of the patent: **29.01.2020**
(21) Application number: 18197250.6
(22) Date of filing: 27.09.2018
(51) Int. Cl.: G08C 17/02, H04B 17/318, H04W 52/24, F24F 11/62, F24F 11/58, F24F 1/0003

(54) **CONTROL METHOD OF AIR CONDITIONER SYSTEM**
STEUERUNGSVERFAHREN FÜR EIN KLIMAANLAGENSYSTEM
PROCÉDÉ DE COMMANDE DE CLIMATISEUR

(30) Priority: 29.09.2017 KR 20170128053
(43) Date of publication of application: 03.04.2019
(73) Proprietor: LG Electronics Inc., Yeongdeungpo-gu Seoul 07336 (KR)
(72) Inventor: YOON, Seontae, 08592 Seoul (KR)
(74) Representative: Vossius & Partner Patentanwälte Rechtsanwälte mbB

(56) References cited:
- WO-A1-2017/018395
- WO-A1-2017/135164
- KR-A- 20040 093 639
- KR-A- 20070 065 708
- US-A1- 2016 327 304

## Description

### BACKGROUND OF THE INVENTION

### 1. Field of the invention

The present invention relates to an air conditioner system and a control method thereof and, more particularly, to an air conditioner system in which units are able to wirelessly communicate with each other and a control method thereof.

### 2. Description of the Related Art

An air conditioner may provide a comfortable indoor environment to humans by discharging cold air to a room to adjust an indoor temperature and purify air of the room to create a pleasant indoor environment. The air conditioner may include an indoor unit including a heat exchanger and may be installed in a room. The air conditioner may also include an outdoor unit including a compressor, a heat exchanger, and the like, and the outdoor unit may supply a refrigerant to the indoor unit.

The air conditioner, in which the indoor unit including the heat exchanger and the outdoor unit including the compressor, the heat exchanger, and the like, are separately controlled, may be operated by controlling power supplied to the compressor or the heat exchanger. The outdoor unit and the indoor unit may be connected by a refrigerant pipe. Compressed refrigerant from the compressor of the outdoor unit may be supplied to the heat exchanger of the indoor unit through the refrigerant pipe. Heat-exchanged refrigerant in the indoor unit's heat exchanger may flow back into the outdoor unit's compressor through the refrigerant pipe. As a result, the indoor unit may discharge the cold or hot air into the room via the heat exchange using the refrigerant.

Air conditioners may be interconnected between buildings or interconnected in small groups. An air conditioner system may transmit and receive the data, and monitor a condition of the corresponding air conditioner based on the transmitted and received data.

Recently, more and more attempts are made for wireless communication between units, so there are increasing cases in which a wireless network is configured between not just units, such as an indoor unit, an outdoor unit, a controller, etc., but also other devices, such as a mobile terminal.

When it comes to devices connected via wireless communication, it is possible to check information of the devices and control the devices without being limited to where a user and the devices are located.

However, as more and more wireless connected devices are used, it may lead to interference between devices positioned in a neighborhood area.

Thus, there is need for a method of optimizing signal strength and a wireless communication range where mutual interference between wirelessly connected units is prevented.

WO 2017/135164 (A1) relates to a control system which has a plurality of communications devices capable of wirelessly communicating with each other over a plurality of communication pathways, and a terminal device that wirelessly communicates with the plurality of communication devices. This document discloses the following: a control method of an air conditioner system comprising a plurality of units, the method comprising:
- measuring, by the second unit, reception sensitivity, by wirelessly communicating with units belonging to the particular group while reducing signal strength from default signal strength;
- when the reception sensitivity and the transmission and reception success rate, which are measured by the second unit, satisfy the predetermined standard, determining, by the second unit, that signal strength corresponding to a level right before a level satisfying a predetermined standard is signal strength for use; and
- transmitting, by the second unit, information related to the signal strength for use to the first unit.

### SUMMARY OF THE INVENTION

The present invention provides an air conditioner system capable of setting optimal signal strength at which mutual interference is prevented, and a control method thereof.

The present invention provides an air conditioner system capable of implementing a high-quality wireless communication environment, and a control method thereof.

The present invention provides an air conditioner system in which each unit is capable of wirelessly communicating with one another, regardless an installation environment, and a control method thereof.

In one general aspect of the present invention, the above and other objects can be accomplished by the provision of a control method of an air conditioner system, the method including: transmitting, by a first unit among a plurality of units belonging to a particular group, a wireless signal auto tuning command to a second unit; measuring, by the second unit, reception sensitivity and a transmission and reception success rate, by wirelessly communicating with units belonging to the particular group while reducing signal strength from default signal strength; when the reception sensitivity and the transmission and reception success rate, which are measured by the second unit, satisfy the predetermined standard, determining, by the second unit, that signal strength corresponding to a level right before a level satisfying a predetermined standard is signal strength for use; and transmitting, by the second unit, information related to the signal strength for use to the first unit. Accordingly, it is possible to set optimal signal strength at which mutual interference is prevented.

In another general aspect of the present invention, the above and other objects can be accomplished by the provision of a control method of an air conditioner system, the method including: when a communication error occurs in a fourth unit among a plurality of units belonging to a particular group, transmitting, by the fourth unit, a notification signal for notifying a wireless signal auto tuning process to other units belonging to the particular group; measuring, by the fourth unit, reception sensitivity and a transmission and reception success rate, by wirelessly communicating with units belonging to the particular group while increasing signal strength by one level at a time; when the reception sensitivity and the transmission and reception success rate, which are measured by the fourth unit, satisfy a predetermined standard, determining, by the fourth unit, that signal strength of a level satisfying the predetermined standard is signal strength for use; and transmitting, by the fourth unit, information related to the signal strength for use to a first unit belonging to the particular group. Accordingly, it is possible to set optimal signal strength at which mutual interference is prevented.

According to at least one embodiment of the present invention, it is possible to set optimal signal strength at which mutual interference is prevented.

In addition, according to at least one embodiment of the present invention, a high-quality wireless communication environment may be implemented.

In addition, according to at least one embodiment of the present invention, an air conditioner system in which each unit is able to wirelessly communicate with one another regardless of an installation environment, and a control method thereof may be provided.

Meanwhile, other effects may be explicitly or implicitly disclosed in the description of the embodiments of the present invention.

### BRIEF DESCRIPTION OF THE DRAWINGS

The embodiments will be described in detail with reference to the following drawings in which like reference numerals refer to like elements wherein:
FIG. 1 is a diagram schematically illustrating configuration in which an air conditioner system according to an embodiment of the present invention is installed in a building;
FIG. 2 is a diagram illustrating configuration of an air conditioner system according to an embodiment of the present invention;
FIG. 3 is a diagram for explaining communication in an air conditioner system according to an embodiment of the present invention;
FIG. 4 is a block diagram schematically illustrating control configuration of units in an air conditioner system according to an embodiment of the present invention;
FIG. 5 is an inner block diagram schematically illustrating a mobile terminal according to an embodiment of the present invention;
FIG. 6 is a diagram for explaining an air conditioner system according to an embodiment of the present invention;
FIG. 7 is a flowchart illustrating a control method of an air conditioner system according to an embodiment of the present invention;
FIG. 8 is a flowchart illustrating a method of controlling an air conditioner system according to an embodiment of the present invention; and
FIGS. 9 and 10 are diagrams illustrating a control method of an air conditioner system according to an embodiment of the present invention.

### DETAILED DESCRIPTION OF THE EMBODIMENTS

Hereinafter, embodiments of the present invention will be described in detail with reference to the accompanying drawings. While the invention will be described in conjunction with exemplary embodiments, it will be understood that the present description is not intended to limit the invention to the exemplary embodiments.

In the drawings, in order to clearly and briefly describe the invention, parts which are not related to the description will be omitted and, like reference numerals refer to like elements throughout.

In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other.

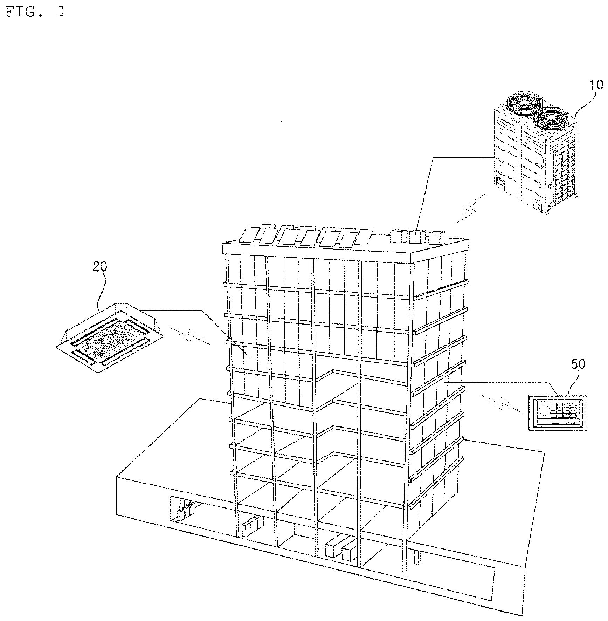

FIG. 1 is a diagram schematically illustrating configuration in which an air conditioner system according to an embodiment of the present invention is installed in a building.

Referring to FIG. 1, an air conditioner system may include an outdoor unit 10, an indoor unit 20, and a controller 50.

In addition to the indoor unit and the outdoor unit, the air conditioner system may include a ventilator, an air purifier, a humidifier, a heater, etc... and may further include other units, such as a chiller, an air conditioning unit, and a cooling tower, depending on a size of the air conditioner system. In addition, the air conditioner system may be operatively connected to a mobile device, a security device, an alarm device, etc. located in the building.

The controller 50 may control operation of the indoor unit 20 and the outdoor unit 10 in accordance with an input user command, periodically receive and store data on corresponding operation states of the indoor unit and the outdoor unit, and output the operation states through a monitor screen. The controller 50 may perform operation setting, lock setting, schedule control, group control, peak control regarding power consumption, demand control, etc. of the indoor unit 20.

The outdoor unit 10 is connected to the indoor unit 20 to supply refrigerant to the indoor unit 20. In addition, by periodically communicating with a plurality of indoor units 20, the outdoor unit 10 transmits and receives data with respect to the plurality of indoor units 20, and changes operation in accordance with an operating setting changed through an indoor unit.

The indoor unit 20 may include an electronic expansion valve (not shown) for expanding refrigerant supplied from the outdoor unit 10, an indoor heat exchanger (not shown) for heat-exchanging refrigerant, an indoor unit fan (not shown) for allowing indoor air to flow into the indoor heat exchanger and for allowing the heat-exchanged air to be exposed to the indoor, a plurality of sensors (not shown), and control means (not shown) for controlling the operation of the indoor unit.

The indoor unit 20 may include a discharge port (not shown) for discharging the heat-exchanged air. The discharge port is provided with a wind direction adjusting means (not shown) for closing the discharge port and controlling the direction of the discharged air. The indoor unit 20 may control the rotating speed of the indoor unit fan, thereby controlling the intake air and the air to be discharged and controlling the air flow rate. The indoor unit 20 may further include an output unit for displaying the operation state and setting information of the indoor unit, and an input unit for inputting the setting data. In this case, the indoor unit 20 may transmit setting information regarding air conditioner operation to a remote controller (not shown) connected thereto, output the information via the remote controller, and receive data.

The remote controller (not shown) is connected to the indoor unit via wired communication or wireless communication to input a user command to the indoor unit, receive data on the indoor unit, and output the received data. According to a method of connection with the indoor unit The remote controller may transmit a user command to the indoor unit and perform one-directional communication, in which data on the indoor unit is not received, or bidirectional communication, data is transmitted and received with respect to the indoor unit.

The outdoor unit 10 may operate in the cooling mode or the heating mode in response to data received from the indoor unit 20 connected thereto or a control command received from the controller, and supply refrigerant to the indoor unit connected thereto.

In the presence of a plurality of outdoor units, each outdoor unit may be connected to a plurality of indoor units, and supply refrigerant to a plurality of indoor units via a distributor.

The outdoor unit 10 may include at least one compressor for compressing the refrigerant and discharging the pressurized gas refrigerant, an accumulator that separates the gas refrigerant and the liquid refrigerant from the refrigerant to prevent the non-vaporized liquid refrigerant from entering the compressor, an oil collection unit for collecting oil from the refrigerant discharged from the compressor, an outdoor heat exchanger for condensing or evaporating the refrigerant via heat exchange with the outside air, an outdoor unit fan for introducing air into the outdoor heat exchanger in order to facilitate the heat exchange of the outdoor heat exchanger and for discharging the heat-exchanged air to the outside, a four-way valve that changes the refrigerant flow path according to an operation mode of the outdoor unit, at least one pressure sensor for measuring pressure, at least one temperature sensor for measuring temperature, and a control unit for controlling operation of the outdoor unit and performing communication with other units. The outdoor unit 10 may further include a plurality of sensors, valves, super-coolers, etc., but description thereof may be omitted below.

In addition, the air conditioner system may transmit and receive data with respect to another air conditioner via network connection such as the Internet. An air conditioner may access an external service center, a management server, a database, etc., via the controller, and may communicate with an external terminal accessing via a network. The terminal may access at least one unit in the air conditioner system, and monitor and control operation of the air conditioner system as a second controller.

In addition, the outdoor unit 10, the indoor unit 20, the controller 50, and the like may wirelessly communicate directly with each other by a specific wireless communication method, and the outdoor unit 10, the indoor unit 20, the controller 50, and the like may wirelessly communicate directly with a mobile terminal by the specific wireless communication method. As a result, a user is able to monitor a state of each unit conveniently using a mobile terminal, and control each unit.

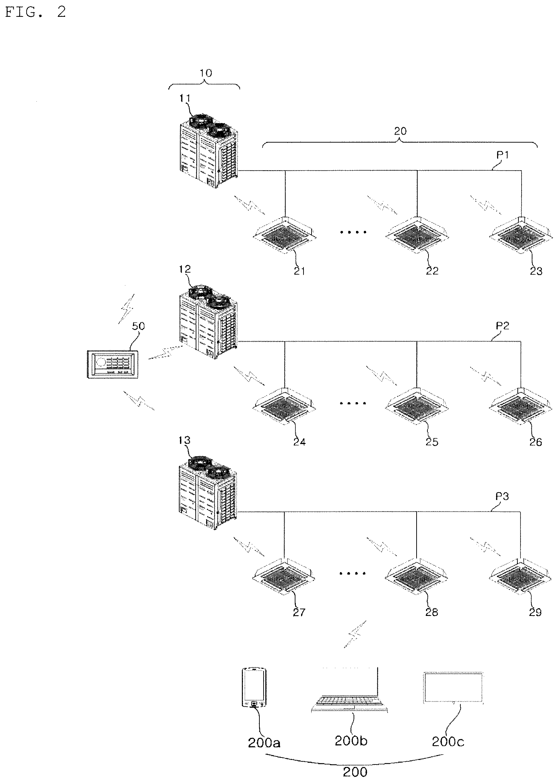

FIG. 2 is a diagram illustrating configuration of an air conditioner system according to an embodiment of the present invention.

Referring to FIG. 2, in the air conditioner according to an embodiment of the present invention, a plurality of indoor unit 20, a plurality of outdoor units 10, and a controller 50 transmit and receive data by a wireless communication method.

The outdoor units 10 may be connected to the plurality of indoor units 20 via refrigerant pipes P1, P2, and P3, and transmit and receive data with respect to the plurality of indoor units 20 by a wireless communication method.

By periodically communicating with the plurality of indoor units 20, the outdoor units 10 may transmit and receive data with respect to the indoor units 20 and change operation according to change of operation setting of the indoor units 20. The plurality of outdoor units 10 and the plurality of indoor units 20 may transmit and receive data by a wireless communication method.

The indoor units 20 may communicate not just with the outdoor units 10, but also with the controller 50 by a wireless communication method.

A first outdoor unit 11 is connected to first, second, and third indoor units 21, 22, and 23 via a first refrigerant pipe PI; a second outdoor unit 12 is connected to fourth, fifth, and sixth indoor units 24, 25, and 26 via a second refrigerant pipe P2; and a third outdoor unit 13 is connected to seventh, eighth, and ninth indoor units 27, 28, and 29 via a third refrigerant pipe P3. For convenience of explanation, each outdoor unit is described being connected to three indoor units, but it is merely exemplary and there is no limitation on the number or shape of indoor units.

Refrigerant is supplied to the first, second, and third indoor units 21, 22, and 23 from the first outdoor unit 11 upon operation of the first outdoor unit 11; refrigerant is supplied to the fourth, fifth, and sixth indoor units 24, 25, and 26 via the second refrigerant pipe P2 from the second outdoor unit 12 upon operation of the second outdoor unit 12; and refrigerant is supplied to the seventh, eighth, and ninth indoor units 27, 28, and 29 from the third outdoor unit 13 via the third refrigerant pipe P3 upon operation of the third outdoor unit 13.

Air conditioners may be grouped by an outdoor unit, and each group of air conditioners may communicate using a different channel. An indoor unit performs heat exchange using refrigerant supplied from an outdoor unit and discharges cold or hot air, and thus, the indoor unit and the outdoor units connected via a refrigerant pipe may be set as one group.

For example, the first outdoor unit 11 may form a first group with the first, second, and third indoor units 21, 22, and 23 connected thereto via the first refrigerant pipe PI; the second outdoor unit 12 may form a second group with the fourth, fifth, and sixth indoor units 24, 25, and 26 connected thereto via the second refrigerant pipe P2; and the third outdoor unit 13 may form a third group with the seventh, eighth, and ninth indoor units 27, 28, and 29 connected thereto via the third refrigerant pipe P3. An outdoor and a controller may form a group according to where they are installed. A state of connection via a refrigerant pipe may be distinguished based on whether there is a change in temperature of an indoor unit by supply of refrigerant from an outdoor when the outdoor unit and the indoor unit are operated.

The controller 50 may communicate with the indoor units 20 or the outdoor units 10, regardless of a group.

The controller 50 controls operation of the plurality of indoor units 20 and the plurality of outdoor units 10 In response to an input user command, periodically receive and store data on corresponding operation of the plurality of indoor units and the plurality of outdoor units, and outputs an operation state through a monitor screen.

The controller 50 may be connected to the plurality of indoor units 20 to perform operation setting, lock setting, schedule control, group control, peak control regarding power consumption, demand control, etc. In addition, by communicating with the outdoor units 10, the controller 50 controls the outdoor units 10 and monitors operation of the outdoor unit 10.

In the case where the controller 50 is implemented as a plurality of controllers, the plurality of controllers may transmit and receive data with each other through mutual wireless communication and may be connected to an external controller via a specific network.

When a controller and a plurality of units transmit and receive data by a wireless communication method, addresses necessary for the communication are stored in the controller and each unit. Each address may be allocated by an outdoor unit and the controller.

As described above, an outdoor may be grouped with indoor units connected thereto via a refrigerant pipe. In this case, addresses may be allocated to the outdoor unit and the indoor units belonging to the same group of the outdoor unit. In addition, even though a group is set with reference to an outdoor unit, communication is possible with every outdoor unit and every indoor unit. Accordingly, the controller may allocate addresses for central control in addition to addresses for communication on a group basis. In some cases, the controller may use the addresses allocated to an outdoor unit and indoor units as addresses for the central control, without allocating additional addresses.

Meanwhile, each unit of the air conditioner system, such as the outdoor units 10, the indoor units 20, and the controller 50, may wirelessly communicate with a mobile terminal 200.

Referring to FIG. 2, the air conditioner system according to an embodiment of the present invention may further include the mobile terminal 200 which is enabled to check a condition of an electronic device (unit), such as the outdoor units 10, the indoor units 20, and the controller 50, and a condition of an electronic device in the system.

The mobile terminal 200 may be provided with an application for controlling the air conditioner system, and check and control a state of the air conditioner system by executing the application.

The mobile terminal 200 may be, for example, a smart phone 200a embedded with an application for the air conditioner system, a laptop 200b, a tablet PC 200c, etc.

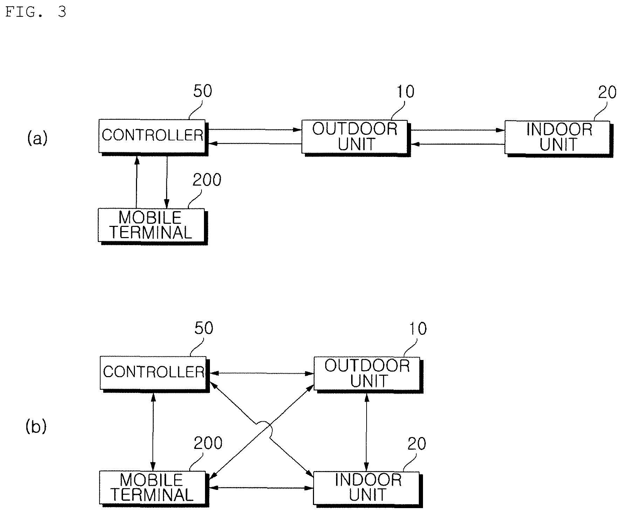

FIG. 3 is a diagram for explaining communication in an air conditioner system according to an embodiment of the present invention. FIG. 3(a) shows communication between units using wired communication, and FIG. 3(b) shows communication between units using wireless communication according to the present invention.

Referring to (a) of FIG. 3, a plurality of units in the air conditioner system is connected via communication lines. Since there is limitation in connection of the communication lines, the plurality of units is not connected one by one but is connected in phases according to a connected shape of connection lines.

A plurality of indoor units are connected to one outdoor unit via a communication line, and the outdoor unit is connected to the controller. When there is a plurality of outdoor units, the plurality of indoor units is connected to the plurality of outdoor units with reference to a connected state of a refrigerant pipe. The plurality of outdoor unit is connected to the controller.

An indoor units transmit data to an outdoor units, and the outdoor units transmits its own data and the data received from the indoor unit to the controller. The controller may check an operation state of the indoor unit based on data received from the outdoor units.

In the case where the controller transmits a control command to an indoor unit, the controller transmits the control command to an outdoor unit connected to the indoor unit and the outdoor unit transmits the received control command to the indoor unit.

As such, in the case of wired communication, a plurality of units is not connected one by one, so data is transmitted in phases according to a connection state of communication lines.

Accordingly, since data of an indoor unit is not able to be transmitted directly, there is time delay in transmission of the data. In addition, since an outdoor unit needs to process even data on another unit, load is increased. Furthermore, since one outdoor unit needs to process data on a plurality of indoor units, it takes long time to transmit data depending on the number of indoor units connected to the outdoor unit.

In addition, even when a state of units are monitored using the mobile terminal 200, data on an indoor unit is not able to be transmitted directly and thus the data may be transmitted and received via the controller 50 or the like. The mobile terminal 200 is not capable of freely communicating with each unit of the air conditioner system, and needs to receive, from a particular unit, only information on the particular unit and communicate with the controller 50 of an upper layer in order to obtain whole information.

As shown in (b) of FIG. 3, an outdoor unit 10, an indoor unit 20, a controller 50, and a mobile terminal 200 transmits and receives data with respect to each other by a wireless communication method.

The controller 50 and/or the mobile terminal 200 may request data from each of the outdoor unit 10 and the indoor unit 20, and may determine an operation state or abnormality of each unit based on data received from each of the outdoor unit 10 and the indoor unit 20.

In the above, grouping an outdoor unit and an indoor in consideration of a flow of refrigerant has been described, but a communication channel including the controller, the outdoor unit, and the indoor unit may be set separately from a communication channel between the outdoor unit and the indoor unit.

The controller 50 and/or the mobile terminal 200 may change operation setting of the indoor unit based on data received from the indoor unit 20 according to a condition (temperature or humidity) of an indoor space where the indoor unit 20 is installed, and transmits data dependent upon the change of the operation setting directly to the indoor unit. In this case, when the operation setting is changed, the indoor unit 20 transmits the corresponding data to the outdoor unit and accordingly operation of the outdoor unit 10 is changed as well.

When the indoor unit 20 is scheduled to operate at a preset time, the controller 50 may transmit an operation command to the indoor unit and the outdoor connected thereto, and the indoor unit may transmit a response to the operation command to the controller 50 and transmit data on an operation state thereof at a predetermined interval.

In response to data received through an input unit or data received from the controller 50, the indoor unit 20 sets operation and transmits data to the outdoor unit.

The outdoor unit 10 controls a compressor by calculating a load according to the data received from the indoor unit and an operation state of a plurality of indoor units.

The outdoor unit 10 and the indoor unit 20 may transmit data to the controller 50 at a predetermined time interval, and transmit error or abnormality-related data to the controller 50 in response to an occurrence of an error or an abnormality, regardless of a cycle.

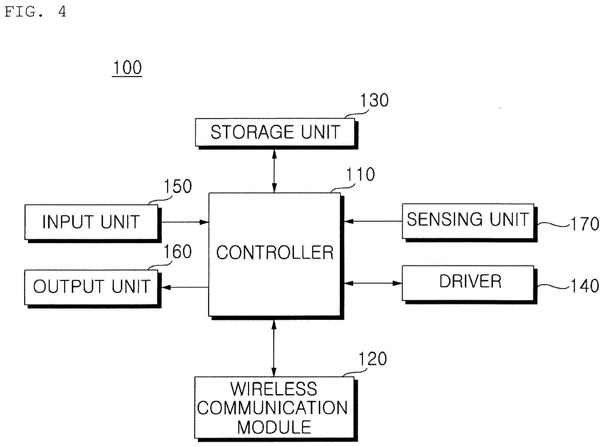

FIG. 4 is a block diagram schematically illustrating control configuration of units in an air conditioner system according to an embodiment of the present invention.

An electronic device according to an embodiment of the present invention may be a unit 100 in an air conditioner system. For example, an electronic device according to an embodiment may be one of an indoor unit, an outdoor unit, a controller, and a wireless sensor in an air conditioner system.

Referring to FIG. 4, the unit 100 in the air conditioner system may include a driver 140, a sensing unit 170, an output unit 160, an input unit 150, a storage unit 130, and a controller 110 for controlling overall operation.

In addition, the unit 100 may be provided with a wireless communication module 120 or may be connected to the wireless communication module 120. The wireless communication module 120 may be embedded in a unit or installed outside the unit.

These are common components included in every unit 100, and an additional component may be added depending on characteristics of a product.

For example, the outdoor unit 10 includes a compressor, an outdoor unit fan, and a plurality of valves. Accordingly, drivers of the outdoor unit may be classified into a compressor driver, an outdoor unit fan driver, and a vale controller.

The indoor unit 20 is provided with a louver or a vane as a wind direction adjusting means, and may be provided with an indoor unit fan driver, a valve controller, and a wind direction controller as the indoor unit 20 includes an indoor fan and a plurality of valves.

In addition, the type, the number, and the installation positions of sensors included in the sensing unit 170 may vary depending on a type of a unit.

The storage unit 130 stores control data for controlling operation of the unit 100, communication data for setting an address necessary to communicate with another unit or setting a group, data transmitted and received with respect to the outside, and operation data generated or sensed during operation. The storage unit 130 stores an execution program of each function of the unit, data for operation control, and transmitted and received data.

The storage unit 130 may be implemented in a hardware manner, as a variety of storage devices such as ROM, RAM, EPROM, flash drive, hard drive, and the like.

The input unit 150 includes at least one input means, such as a button, a switch, and a touch input means. When a user command or specific data is input in response to manipulation of an input means, the input unit 150 transmits the input data to the controller 110. The outdoor unit may be provided with a test run key and an address setting key, and the indoor unit may be provided with a power key, a menu input key, an operation setting key, a temperature adjusting key, a wind power key, a lock key, etc.

The output unit 160 may include at least one of a lamp which is controlled to be turned on or blink, an audio output unit provided with a speaker for outputting specific sound, or a display so as to output an operation state of the unit. The lamp notifies whether the unit is in operation, depending on whether the lamp is turned on, which color the lamp is turned on, whether the lamp is blinking, and the speaker output an operation state by outputting specific alarming sound or effect sound. The display may output a menu screen for controlling the unit, and output a guidance message or an alarm related to operation setting or an operation state of the unit, wherein the guidance message or the alarm is composed of a combination of at least one of a text, a number, or an image.

The sensing unit 170 may include a plurality of sensors. The sensing unit 170 may include a pressure sensor, a temperature sensor, a gas sensor, a humidity sensor, and a flow sensor.

For example, a plurality of temperature sensor is provided to sense indoor temperature, outdoor temperature, temperature of an indoor heat-exchanger, temperature of an outdoor heat-exchanger, and pipe temperature, and to input sensed values to the controller 110. The pressure sensor is installed at an inlet port and an outlet port of a refrigerant pipe, measure pressure of flowing refrigerant and pressure of discharged refrigerant, and input measurements to the controller 110. The pressure sensor may be installed not just in the refrigerant pipe, but also in a water pipe.

The driver 140 supplies operation power to a control target in accordance with a control command of the controller 110, and controls driving of the control target. As described above, in the case of an outdoor unit, the driver 140 may be provided as a compressor driver, an outdoor unit fan driver, and a value controller for controlling a compressor, an outdoor fan, and a vale, respectively. The driver 140 may apply operation power to motors provided in the compressor, the outdoor unit fan, the value, etc. so that preset operations are performed upon operation of the motors.

The wireless communication module 120 supports at least one or more wireless communication methods, and communicate with another unit in accordance with a control command of the controller 110. The wireless communication module 120 may transmit and receive data in a wireless communication method set between the controller, the outdoor unit, and the indoor unit, and transmit received data to the controller.

The wireless communication module 120 sets an address for communication between units, transforms data to be transmitted and received, and processes a signal. Upon operation of the unit, the wireless communication module 120 searches for a unit in the same frequency band through wireless communication, and verifies connection to the unit. The wireless communication module 120 performs communication by allocating a temporary address for an initial operation or setting a received temporary address. In addition, when setting an address in response to a control command of the controller, the wireless communication module 120 may request a product number from the controller and set an address based on the product number. The product number may be a unique number, a serial number, a Media Access Control (MAC) address, or the like of the unit.

The controller 110 controls data to be input and output trough the input unit 150 and the output unit 160, manages data stored in the storage unit 130, and controls transmitting and receiving data through the wireless communication module 120. The controller 110 senses a connection state and a communication state of the wireless communication module 120 through a connection unit (not shown), and determines an error.

The controller 110 generates a control command to operate in accordance with a request from another unit or a set operation setting, and transmits the control command to the driver 140. Accordingly, the driver 140 may control a component connected thereto, for example, a compressor, an output unit fan, a value, an indoor fan, a wind direction adjusting means, etc. to operate.

In addition, while a unit is in operation, the controller 110 determines an operation state of the unit based on data received from a plurality of sensors of the sensing unit 170, and outputs an error.

The wireless communication module 120 may be provided inside the unit 100 or may be connected to the unit 100 via a connection unit (not shown). The wireless communication module 120 receives data of the unit via the connection unit, and transmits received data to the unit.

The wireless communication module 120 may perform wireless communication using a sub-GHz frequency band so that communication is enabled despite the presence of a wall, a floor, an obstacle, etc. in a building. The sub-GHz frequency band has excellent transmission and rotation characteristics, and thus is less attenuated in response to a wall or an inter-floor object. Thus, the wireless communication module 120 is efficient to be used for communication within an air conditioner system provided with a plurality of units in a building partitioned by walls.

The wireless communication module 120 performs communication using one of 400MHz and 900MHz which are unlicensed bands available for a lower power wireless station in Sub-GHz bands. The wireless communication module 120 may selectively use 400MHz and 900MHz in response to a standard which is different depending on a region or country.

In addition, the wireless communication module 120 may further include a Zigbee module, a Bluetooth module, an NFC module, and any other communication module which is a short-range communication technology.

The wireless communication module 120 includes a plurality of communication modules, so the same communication module or different communication modules may be used for communication between an outdoor unit and another indoor unit, communication with a remote controller, and communication with the controller. The wireless communication module 120 may perform communication by a different communication method according to a target to communicate, by selectively changing the communication method in response to the target to communicate.

When different channels are used for communication with an indoor unit and communication with a controller, the wireless communication module 120 may transmit and receive data by setting a different channel according to a target to communicate.

According to the Korean radio wave act, over a frequency band of 400MHz or 900MHx, there are 21 channels between 424.7MHz and 424.95MHz and 11 channels between 447.8625MHz and 447.9875MHz for radio equipment of a specific low-power wireless station used for data transmission, and 32 channels between 917MHz and 923.5MHz for radio equipment of RFID/USN. Thus, communication may be performed using the above channels.

Unlicensed frequency bands used in countries are as below: 902-928MHz (FCC Part 15.247) in North and South America; 433MHz, 915MHz, and 863-868MHz(ETSIEN300220) in Europe; 920- 928MHz(ARIB STD-T108) in Japan; 920MHz in China; 424- 447MHz and 917-923.5MHz(KC) in South Korea; 865- 867MHz(G.S.R 564(E)) in India; 433MHZ and 915MHZ in Australia; and 433MHz in South Africa. Across the world, 2.4GHz and 5.72GHz are commonly available.

In addition, if 902-928 MHz is used in the North and South America, 863-868MHz in Europe, 920-928MHz in Japan, 917 to 923.5MHz in South Korea, 865-867 MHz in India, and 2.74GHz/5.72GHz commonly across the word, communication may be possible at 50kbps or faster.

Since an obstacle such as a wall between floors and furniture exists in a building, it is necessary to use a frequency band which allows a signal to pass through such an obstacle and reach a predetermined distance or more.

The Industrial, Scientific and Medical (ISM) band (100MHz, 20MHz, 400MHz, 900MHz) in Sub-GHz bands has an excellent feature of penetrating in a building and thus enables inter-floor communication. A length of an antenna depends on a transmitting frequency band, and, since 100MHz and 200MHz requires a long antenna length, there is restriction to install an antenna.

Therefore, it is desirable for the wireless communication module 120 to perform communication using a frequency band of 400MHz or 900MHz out of the aforementioned frequency bands.

Meanwhile, the wireless communication module 120 may receive a search signal from a mobile terminal, and transmit a response signal in response to the received search signal.

When a signal corresponding to an electronic device search command is received from the mobile terminal, the controller 110 may control a set feedback operation to be performed.

The controller 110 may control the output unit 160 to perform the set feedback operation.

For example, when the output unit 160 is provided with a lamp, the set feedback operation may be the lamp's being turned on.

In addition, when the output unit 160 is provided with a display, the set feedback operation may be the display's displaying a specific image.

In addition, when the output unit 160 is provided with an audio output unit, the set feedback operation may be the audio output unit's outputting predetermined sound.

Alternatively, the controller 110 may transmit a signal to a remote controller connected to a corresponding electronic device so as to control the remote controller to output a visual and/or audible effect.

Alternatively, the controller 110 may control the driver 140 to perform a preset feedback operation.

Take an example in which the unit 100 is an indoor unit. When the wireless communication module 120 receives a signal corresponding to an electronic device search command from a mobile terminal, the controller 110 may control the driver 140 to swing a louver or vane a predetermined number of times.

Accordingly, it is possible to quickly and easily find out a particular unit from among a plurality of units 100 in one building.

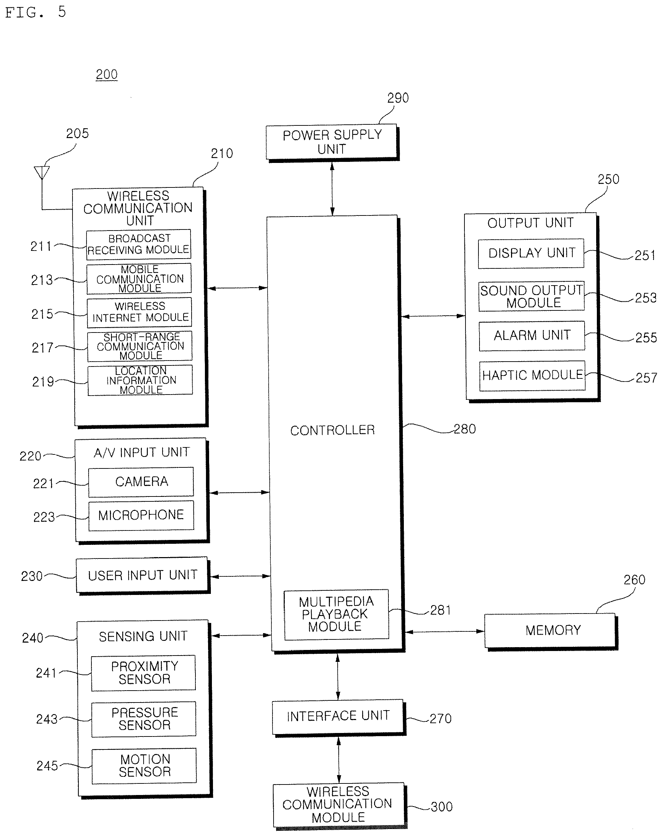

FIG. 5 is an inner block diagram schematically illustrating a mobile terminal according to an embodiment of the present invention.

Referring to FIG. 5, a mobile terminal 200 may include a wireless communication unit 210, an Audio/video(A/V) input unit 220, a user input unit 230, a sensing unit 240, an output unit 250, a memory 260, an interface unit 270, a controller 280, and a power supply unit 290.

The mobile terminal according to one aspect of the present invention may include: a display unit 251, a wireless communication module 300 wirelessly communicating with a plurality of electronic devices; and a controller 280 performing control such that the wireless communication module 300 transmits a search signal regarding the plurality of electronic devices and receives response signals from the plurality of electronic devices and the display unit 251 displays a search result screen regarding the electronic devices from which the response signals are received.

The wireless communication module 300 may be configured as one block of the wireless communication unit 210.

In the case of wirelessly communicating with each unit 100 included in the air conditioner system using a sub-GHz band, the wireless communication module 300 supporting wireless communication in a sub-GHz band may be used. Not all the common mobile terminals 200 are embedded with the wireless communication module 300 supporting sub-GHz band wireless communication, so it is desirable to use a dedicated wireless communication module 300 for connection.

In this case, the wireless communication unit 300 may be connected via the interface unit 270 or via the wireless communication unit 210.

In some implementations, a search signal regarding a plurality of electronic devices may be a search signal regarding wireless communication modules provided in the plurality of electronic devices. The response signals may include identification information of the wireless communication modules provided in the plurality of electronic devices or identification information of the plurality of electronic devices.

The controller 280 may transmit a signal for requesting a search for the plurality of electronic devices to the wireless communication module 300, and, when a predetermined period of time has elapsed, the controller 280 may transmit a signal for requesting a search result.

Meanwhile, based on signal strength of the response signals, the controller 280 may perform control to display items corresponding to the electronic devices from which the response signals are received. Accordingly, a user is able to easily check information on a found device and control the corresponding device.

If a search input is received regarding one of the items displayed on the search result screen, the controller 280 may perform control to transmit a predetermined signal to an electronic device corresponding to the item regarding which the search input is received. The predetermined signal may be a signal for requesting the recipient electronic devices to perform a feedback operation which is set for each of the recipient electronic devices. Accordingly, a user is able to quickly and easily find out a particular unit from among the plurality of units 100 in a building.

Meanwhile, the items corresponding to the electronic devices from which the response signals are received may be displayed sequentially in descending order of signal strength of the response signals.

In addition, the search result screen includes an object corresponding to a mobile terminal and objects corresponding to the electronic devices from which the response signals are received. The greater the strength of a response signal is received from an electronic device, the closer the object corresponding to the electronic device is displayed relative to the object corresponding to the mobile terminal.

In addition, on the search result screen, the electronic devices from which the response signal are received may be displayed distinguishably based on types of the electronic devices.

Meanwhile, the wireless communication unit 210 may include a broadcast receiving module 211, a mobile communication module 213, a wireless internet module 215, a short-range communication module 217, and a location information module(ex) a Global Position System (GPS) module) 219.

The broadcast receiving module 211 may receive at least one of a broadcast signal or broadcast-related information from an external broadcast management server via a broadcast channel. The broadcast channel may include a satellite channel, a terrestrial channel, etc.

The broadcast signal and/or the broadcast-related information received through the broadcast receiving module 211 may be stored in the memory 260.

The mobile communication module 213 transmits and receive a radio signal with respect to at least one of a base station, an external terminal, or a server on a mobile communication network. The radio signal may include a voice call signal, a video call signal, or various types of data according to transmission and reception of text/multimedia message.

The wireless internet module 215 refers to a module for wireless Internet access. The wireless internet module 215 may be embedded in or external to the mobile terminal 200. For example, the wireless internet module 215 may perform Wi-Fi-based wireless communication or Wi-Fi Direct-based wireless communication.

The short-range communication module 217 refers to a module for local area communication, and may support short-range communication using at least one of the following: Bluetooth™, Radio Frequency Identification (RFID), Infrared Data Association (IrDA), Ultra Wideband (UWB), and ZigBee.

The short-range communication module 217 may support wireless communication between the mobile terminal 200 and a wireless communication system, wireless communication between the mobile terminal 200 and another mobile terminal 200, wireless communication between the mobile terminal and a different mobile terminal, or wireless communication between the mobile terminal 200 and a network in which an external server is located via short-range wireless area networks.

The GPS module 219 may receive position information from a plurality of GPS satellites.

Meanwhile, the wireless communication unit 210 may exchange data with a server using one or more communication modules.

The wireless communication unit 210 may include an antenna 205 for wireless communication, and may include an antenna for receiving a broadcast signal in addition to an antenna for making a call.

The A/V input unit 220 is related to an audio signal or a video signal, and may include a camera 221 and a microphone 223.

The user input unit 230 generates key input data that is input by a user to control operation of the terminal. To this end, the user input unit 230 may be in the form of a key pad, a dome switch, a touch pad (static pressure/electrostatic), or the like. In particular, if a touch pad forms an inter-layered structure with a display unit 251, the structure may refer to a touch screen.

The sensing unit 240 may generate a sensing signal for controlling operation of the mobile terminal 200, by sensing the current state of the mobile terminal 200, for example, an opened/closed state of the mobile terminal 200, a position of the mobile terminal 200, and the presence of the user's contact.

The sensing unit 240 may include a proximity sensor 241, a pressure sensor 243, a motion sensor 245, etc. The motion sensor 245 may sense movement or a position of the mobile terminal 200 using an accelerometer, a gyro sensor, a gravity sensor, and the like. In particular, the gyro sensor is a sensor for measuring an angular velocity, which is able to sense a direction (an angle) of rotation against a reference direction.

The output unit 250 may include the display unit 251, a sound output module 253, an alarm unit 255, a haptic module 257, etc.

The display unit 251 displays information processed in the mobile terminal 200.

Meanwhile, when the display unit 251 forms an inter-layered structure with the touch pad to implement a touch screen, the display unit 251 may be used not just as an output device but also as an input device to which information is allowed to be input by a user's touch.

The sound output module 253 outputs audio data received from the wireless communication unit 210 or stored in the memory 260. The sound output module 253 may include a speaker, a buzzer, etc.

The alarm unit 255 outputs a signal for notifying occurrence of an event in the mobile terminal 200. For example, the alarm unit 255 may output a signal in the form of vibration.

The haptic module 257 generates various tactile effects that a user can feel. The typical example of a tactile effect generated by the haptic module 257 may be vibration effect.

The memory 260 may store a program for processing and controlling of the controller 280 or may temporarily store input and output data (e.g., a phone book, messages, still images, videos, etc.).

The interface unit 270 may plays a role as a channel with all external devices connected to the mobile terminal 200. The interface unit 270 receives data or power from an external device and transfers the received data or power to each element of the mobile terminal 200 or allow internal data of the mobile terminal 200 to be transmitted to an external device.

The controller 280 generally controls overall operation of the mobile terminal 200 by controlling operation of each of the aforementioned elements. For example, the controller 280 may perform control or processing related to a voice call, data communication, a video call, and the like. In addition, the controller 280 may be provided with a multimedia playback module 281 for playing multimedia. The multimedia playback module 281 may be implemented in a hardware form inside the controller 280, or may be implemented in a software form separately from the controller 280.

The power supply unit 290 receives external and internal power under a control of the central controller 280 and supplies power necessary for operating each element.

Meanwhile, the mobile terminal 200 shown in FIG. 5 is a block diagram illustrating an embodiment of the present invention. Depending on specifications of the mobile terminal 200 in actual implementation, each constituent element in the block diagram may be combined or omitted or a new element may be added.

That is, two or more components may be combined into one element or one component may be divided into two or more components, as needed. In addition, the function of each block is described for the purpose of describing the embodiment of the present invention and thus specific operations or devices should not be construed as limiting the scope of the present invention.

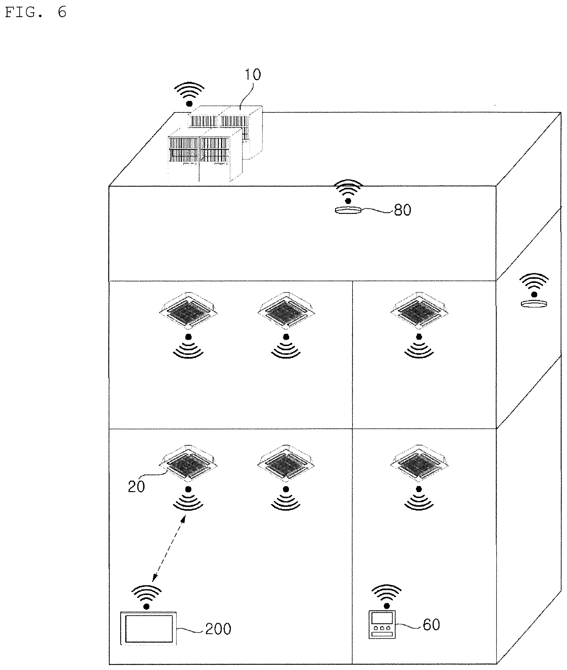

FIG. 6 is a diagram for explaining an air conditioner system according to an embodiment of the present invention.

Referring to FIG. 6, the air conditioner system according to the present invention may include an indoor unit 20, an outdoor unit 10, a remote controller 60, a wireless sensor 80, and a mobile terminal 200.

In addition the air conditioner system may further include a controller, a ventilator, a defrost, a humidifier, a heater, or the like.

The remote controller 60 may be connected to the indoor unit 20 or the outdoor unit 10 in a wired manner, and, more preferably, the remote controller 60 may communicate with the indoor unit 20 or the outdoor unit 10 in a wireless manner.

As described above with reference to FIGS. 1 to 5, the mobile terminal 200 and the controller 50 (see FIG. 1) may be wirelessly connected to units, such as the indoor unit 20 and the outdoor unit 10, controls each of the units.

In response to a request for data information from the mobile terminal 200 or the controller 50, the indoor unit 20 and the outdoor unit 10 may transmit the requested data information. Depending on content of a request from the mobile terminal 200 or the controller 50, the indoor unit 20 and the outdoor unit 10 may transmit data information with different content.

The indoor unit 20 and the outdoor unit 10 receives a control signal from the mobile terminal 200 and the controller 50. When receiving a control signal from the mobile terminal 200 or the controller 50, the indoor unit 20 and the outdoor unit 10 may report reception of the control signal to the mobile terminal 200 or the controller 50, but aspects of the present invention are not limited thereto and the above process may vary depending on a communication method adapted by the air conditioner system.

When receiving a control signal, the indoor unit 20 and the outdoor unit 10 may perform an operation corresponding to the control signal. The indoor unit 20 and the outdoor unit 10 may receive, from the mobile terminal 200 or the controller 50, a storage cycle or a storage time for storing a data signal including an operation state. The indoor unit 20 and the outdoor unit 10 may store data information periodically or in response to occurrence of an error.

When an error occurs, the indoor unit 20 and the outdoor unit 10 may extend a storage time of the recently stored data information. Each of the indoor unit 20 and the outdoor unit 10 may include a storage medium for storing the data information. For example, the indoor unit 20 and the outdoor unit 10 may periodically receive data information and may store, in response to occurrence of an error, the recently stored data information distinguishably from other information, but aspects of the present invention are not limited thereto.

Data information may include an operation state of the indoor unit 20 or the outdoor unit 10. For example, the data information may include air temperature, compression temperature, evaporation temperature, discharge temperature, heat-exchanger temperature, etc., but aspects of the present invention are not limited thereto and the data information may include a broad range of information related to operation of the indoor unit 20 or the outdoor unit 10.

The indoor unit 20 or the outdoor unit 10 may transmit data information including an operation state to the mobile terminal 200 or the controller 50. When an on/off state or an operation state of the indoor unit 20 or the outdoor unit 10 is changed or when an error occurs, the indoor unit 20 or the outdoor unit 10 may transmit corresponding data information to the mobile terminal 200 or the controller 50. The indoor unit 20 or the outdoor unit 10 may communicate with the mobile terminal 200 or the controller 50 in a predetermined period of in response to occurrence of an event.

The mobile terminal 200 or the controller 50 may receive in real time detailed cycle data, which allows error analysis of each unit, and displays the received data on a screen.

In the case where the mobile terminal 200 or the controller 50 displays data information in a test form such as numbers, data information of the indoor unit 20, data information of the outdoor unit 10, and valve information of a pipe connecting the indoor unit 20 and the outdoor unit 10 may be displayed.

In some implementations, when displaying the valve information, the mobile terminal 200 or the controller 50 may display opening or closing of a valve in the form of color or picture. For example, the mobile terminal 200 or the controller 50 may display a opened valve in blue and a closed valve in gray or may display a picture of an opened valve and a picture of a closed valve, but aspects of the present invention are not limited to the aforementioned color or types of pictures.

In the case of displaying data information in the form of a time series image, the mobile terminal 200 or the controller 50 may select an outdoor unit 10 or an indoor unit 20 to display.

In the case of selecting one outdoor unit 10 from among a plurality of outdoor units 10, the mobile terminal 200 or the controller 50 may select an indoor unit 20 to check, from among a plurality of indoor units 20 connected to the selected outdoor unit 10.

When the outdoor unit 10 and the indoor unit 20 are selected, the mobile terminal 200 or the controller 50 may receive data information, which includes an operation state of the selected indoor unit 20 and a connection state between the selected outdoor unit 10 and the selected indoor unit 20. The connection state may include a connection state of a pipe, a flow inside the pipe, an on/off state of the valve, etc., but aspects of the present invention are not limited thereto.

The mobile terminal 200 or the controller 50 may display an operation state of the selected outdoor unit 10 and the selected indoor unit 20 in a time-series manner in the form of change of a picture or change of color. The mobile terminal 200 or the controller 50 may display a state of a pipe connecting the selected outdoor unit 10 and the selected indoor unit 20, and a state of a value.

The mobile terminal 200 or the controller 50 may check in real time an operation state of the indoor unit 20 or the outdoor unit 10. When checking the operation state of the indoor unit 20 or the outdoor unit 10 in real time, the mobile terminal 200 or the controller 50 may receive data information in real time and display received data information.

The wireless sensor 80 senses an air condition, and transmit air condition data corresponding to the sensed air condition.

The air condition may be a concept including at least one of temperature, humidity, pressure, an amounts of dust, an amount of carbon dioxide, or an amount of oxygen. Accordingly, the wireless sensor 80 may measure at least one of temperature, humidity, pressure, an amount of dust, an amount of carbon dioxide, or an amount of oxygen.

The air condition data may include data on at least one of temperature, humidity, pressure, an amount of dust, an amount of carbon dioxide, or an amount of oxygen.

The wireless sensor 80 may transmit the air condition data in a broadcast manner. The broadcast manner may be a method of transmitting data without specifying a recipient. By transmitting air condition data to a predetermined communication network without specifying a recipient, the wireless sensor 80 may save energy, operations, and components necessary to set a recipient of the data.

The air condition data broadcasted by the wireless sensor 80 may be transferred to the outdoor unit 10 or the indoor unit 20.

In addition, the air condition data broadcasted by the wireless sensor 80 may be transferred to the controller 50 or the mobile terminal 200.

The indoor unit 20 or the outdoor unit 10 may perform an appropriate air conditioning operation based on the received air condition data.

The indoor unit 20 or the outdoor unit 10 may operate in accordance with a control signal received from the controller 50 or the mobile terminal 200.

As shown in FIG. 6, when units are wirelessly connected in the air conditioner system, installation costs and time may be remarkably reduced, compared to when the units are connected in a wired manner.

In addition, it is possible to check information of any one unit and control the corresponding unit by communicating directly the corresponding unit to control without passing through a particular unit, such as the controller 50. As a result, it is advantageous in terms of communication time and convenience of use.

However, in the case where a number of units communicate with each other in a predetermined space, such as a building and an apartment, interference between devices positioned in neighboring areas may occur.

For example, a plurality of indoor units in the same shape are positioned in one building. In addition, a number of indoor units may be positioned on one floor or in one office. Furthermore, units, such as a remote controller 60 and a sensor 80, are positioned in a predetermined space.

Accordingly, each of the indoor unit 20, the outdoor unit 10, the controller 50, the remote controller 60, and the sensor plays a role as a wireless node.

As the number of wirelessly connected devices is increased, interference between devices positioned in neighboring areas may occur.

For example, if the case where the indoor unit 20, the outdoor unit 10, the controller 50, the remote controller 6, and the sensor 80 operates with a default value, which is set when they were first released, for wireless communication, it is possible to reduce signal interference between adjacent products according to an installation environment.

Thus, there are demands for a method for optimizing signal strength and a wireless communication range in order to prevent mutual interference between wirelessly connected units.

The present invention proposes a method for reducing unnecessary communication signal interference by optimizing the signal strength/wireless range between wirelessly connected units after establishment of a communication connection between the units, and for increasing use of limited wireless communication channels.

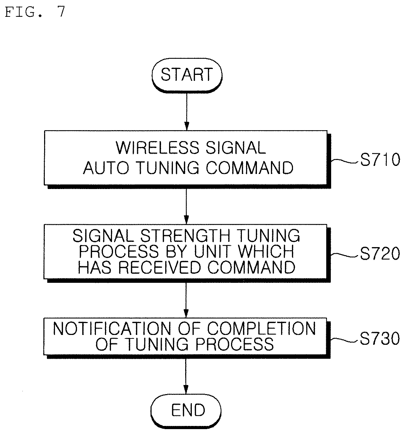

FIG. 7 is a flowchart illustrating a control method of an air conditioner system according to an embodiment of the present invention.

The air conditioner system according to an embodiment of the present invention may include at least one outdoor unit 10 and a plurality of indoor units 20. An air conditioner system installed in a big building may include a plurality of indoor units 10 and a plurality of indoor units 20. In this case, it is desirable that the plurality of indoor units 20 are grouped with an outdoor unit 10 connected thereto via a refrigerant pipe.

In addition, as described above with reference to FIGS. 1 to 6, units belonging to a particular group may wirelessly communicate with each other using a sub-GHz frequency band.

In addition, the air conditioner system according to an embodiment of the present invention may further include a controller 50, a wired/wireless remote controller 60, a sensor 80, and the like in addition to the indoor/outdoor units.

Referring to FIG. 7, a first unit out of the plurality of units belonging to a particular group may transmit a wireless signal auto tuning command to a second unit in S710.

The wireless signal auto tuning command may be a user command received through one of the units belonging to the particular group, or may be automatically transmitted after an initial communication network is constructed.

For example, the first unit may be an outdoor unit 10.

Alternatively, the first unit may be the controller 50. For example, the first unit may be a central controller.

That is, after a command is received from a user or an initial communication network is constructed, a unit, such as the outdoor unit 10 or the central controller, may act as a master device and transmit a wireless signal auto tuning command to another unit belonging to the same group.

Meanwhile, the second unit may be an indoor unit 20, a remote control device, such as a wired/wireless remote controller60, or a wireless sensor 80.

The indoor unit 20, the wired/wireless remote controller 60, the wireless sensor 80, and the like may be slave devices and receive a wireless signal auto tuning command from a master device belonging to the same group.

Next, a unit having received the wireless signal strength auto tuning command may tune strength of the signal in S720. Tuning strength of a signal may include measuring reception sensitivity and a transmission and reception success rate of a signal by changing strength of the wireless signal transmitted by a unit, and determining signal strength to be used for subsequent wireless communication based on the measurements.

For example, the second unit may measure reception sensitivity and a transmission and reception success rate of a signal by wirelessly communicating with units belonging to the particular group while reducing signal strength from default signal strength by one level at a time.

In addition, if the reception sensitivity and the transmission and reception success rate, which are measured by the second unit, satisfy a predetermined standard, the second unit may determine that signal strength corresponding to a level right before a level satisfying the predetermined standard is signal strength for use.

The predetermined standard may be the case where one of the reception sensitivity and the transmission and reception success rate of the signal is equal to or smaller than a reference value.

First, the second unit may transmit a wireless signal having default signal strength to the units belonging to the same group, receive response signals therefrom, and measure reception sensitivity and a transmission and reception success rate of the wireless signal.

The default signal strength may be set to a different level depending on a type of a unit.

For example, great default signal strength may be set for an indoor unit required to communicate with an outdoor and another indoor unit, so signal strength of a signal may be reduced from the great signal strength by one level at a time.

In addition, small default signal strength may be set for a wired/wireless remote controller communicating with one indoor unit or a small number of indoor units, so signal strength of a signal may be reduced from the small signal strength by one level at a time.

Even for a sensor, default signal strength may be determined by a wireless communication range required in an embodiment.

If reception sensitivity and a transmission and reception success rate of a wireless signal having the default signal strength are greater than a preset reference value, signal strength of the wirelessly transmitted signal may be reduced by a predetermined degree and the wireless signal having the reduced signal strength may be transmitted to the units of the same group. Next, response signals may be received from the units to thereby measure reception sensitivity and a transmission and reception success rate of the wirelessly transmitted signal having the reduced signal strength.

If the default signal strength is set to a first-level signal strength and the reduced signal strength is a second-level signal strength, even a value by which the first-level signal strength is reduced to the second-level signal strength may be set in advance.

If the reception sensitivity and the transmission and reception success rate of the wireless signal having the second level signal strength is greater than the preset reference value, the signal strength may be reduced by a predetermined degree and a wireless signal having a third-level signal strength smaller than the second-level signal strength may be transmitted to the units of the same group. Next, response signals may be received from the units to thereby measure reception sensitivity and a transmission and reception success rate of the wireless signal having the third-level signal strength.

If the reception sensitivity and the transmission and reception success rate of the wireless signal having the third-level signal strength are equal to or smaller than the preset reference value, the second unit may determine that signal strength of the second level right before the third level is signal strength for use in wireless communication.

That is, if the quality of communication is reduced to a predetermined level or lower, signal strength of a level right before a level at which the quality of communication has been verified is used, and thus a wireless communication range of a corresponding unit may be adjusted to a minimum range required to communicate with other units. Accordingly, it is possible to minimize interference in communication.

In addition, it is possible to minimize an amount of power to be used in wireless communication.

Meanwhile, when the tuning process is completed as the signal strength for use is determined, the second unit may notify the first unit of the completion of the tuning process in S730.

In this case, the second unit may transmit information related to the signal strength for use to the first unit in S730. For example, the second unit may transmit, to the first unit, information related to the second level signal strength which is determined to be the signal strength for use.

In addition, the information related to the signal strength for use may include data on the determined signal strength, data on the reception sensitivity, and data on the transmission and reception success rate.

According to the present invention, when many devices are wirelessly connected in a building, an apartment, or the like, it is possible to minimize signal interference between devices installed in the same or adjacent building with limited frequency resources.

According to the present invention, it is possible to automatically determine and adjust signal strength without a user's setting, thereby improving convenience of an installer, a manager, and a user.

According to the present invention, test signals are exchanged and data received in response to a test signal is reflected, and therefore, it is possible to verify and determine the reliability of communication only within a range where device-to-device communication is enabled, not communication between all devices in a predetermined space. In addition, depending on operation of a unit, a standby power regulating unit may flexibly change the strength of a wireless communication signal and reduce the strength of transmitted power, thereby improving energy efficiency.

According to an embodiment of the present invention, a communication distance may be determined with respect to a unit which actually performs communication, not all units which uses the same wireless communication channel.

Accordingly, if units using different wireless channels or the same wireless channel are installed at a close distance, unnecessary wireless signal strength may be reduced, thereby reducing signal interference between the units.

Meanwhile, if a tuning process of the second unit is completed, the first unit may control another unit to perform a tuning process and may repeat the above-described procedure from S710 to S730 until all units belonging to the same group complete their tuning processes.

For example, the first unit may transmit the wireless signal auto tuning command to a third unit belonging to the particular group, and the third unit may tune signal strength.

For example, the third unit may measure reception sensitivity and a transmission and reception success rate of a wirelessly transmitted signal by communicating with units belonging to the particular group while reducing the signal strength of the signal from the default signal strength by one level at a time.

In addition, if the reception sensitivity and the transmission and reception success rate measured by the third unit satisfy a predetermined standard, the third unit may determine that signal strength corresponding to a level right before a level satisfying the predetermined standard is signal strength for use.

The third unit may perform the tuning process in the same manner as does the second unit, and, when the tuning process is completed, the third unit may notify the first unit of the completion of the tuning process.

In this case, the third unit may transmit information related to the determined signal strength for use to the first unit.

In addition, when the tuning process of the third unit is completed, the first unit may control another unit to perform a tuning process, and may repeat the above-described procedure from S710 to S730 until all units belonging to the same group complete their tuning processes.

According to an embodiment of the present invention, a master unit, such as an outdoor unit and a central controller, may transmit a wireless signal strength auto tuning command to each slave unit, such as an indoor unit, a sensor, and a remote controller, in a unicast manner.

In this case, the master unit may transmit the command to a next slave unit only when a signal indicative of completion of a tuning process is received sequentially from slave units.

A slave unit may exchange a signal with other units existing in its communication range and tune to optimal signal strength by measuring reception sensitivity and a transmission and reception success rate of a signal so as to.

For example, in the case where default signal strength of a slave unit is 8dBm, if a unit communicating with the slave unit exhibits reception sensitivity of -30dBm and a transmission and reception success rate of 100%, the slave unit may perform a tuning process by reducing the signal strength until the reception sensitivity reaches -80dBm and the transmission and reception success rate becomes 99.5% or more (if the transmission and reception success rate is equal to or smaller than 99.5%, the tuning process is completed in a previous stage).

A slave unit having completed a tuning process may notify the master unit of a result of the tuning process, such as reception sensitivity and a transmission and reception success rate.

According to an embodiment of the present invention, it is possible to reduce signal interference between devices installed in the same building or adjacent buildings, by determining quality and reliability of communication due to presence of a surrounding obstacle and changing transmission power for wireless communication.

In addition, it is possible to automatically set an strength of a wireless signal, regardless of a type of a wireless modulation method, such as Frequency Shift Keying (FSK), Gaussian Frequency Shift Keying (GFSK), Offset Quadrature Phase Shift Keying (OQPSK), Phase Shift Keying (PSK), and Orthogonal Frequency Division Multiplexing (OFDM).

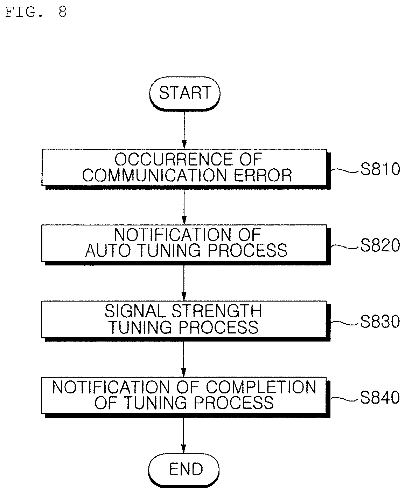

FIG. 8 is a flowchart illustrating a control method of an air conditioner system according to an embodiment of the present invention.

The air conditioner system according to an embodiment of the present invention may include at least one outdoor unit and a plurality of indoor units 20. An air conditioner system installed in a big building may include a plurality of outdoor units 10 and a plurality of indoor units 20. In this case, the plurality of indoor units 20 may be set as one group with an outdoor unit 10 connected thereto via a refrigerant pipe.

In addition, as described above with reference to FIGS. 1 to 6, units belonging to a particular group may wirelessly communicate with each other using a sub-GHz frequency band.

In addition, the air conditioner system according to an embodiment of the present invention may further include other units such as, a controller 50, a wired/wireless remote controller 60, and a sensor 80, in addition to indoor/outdoor units.

Referring to FIG. 8, a communication error may occur in a fourth unit among a plurality of units belonging to a particular group in S810. The communication error may include not just an error situation in which wireless communication does not work, but also degradation of communication quality which indicates that reception sensitivity and a transmission and reception success rate of a signal are reduced to a predetermined level or lower.

While units included in the air conditioner system operate properly after completing a tuning process through the procedure described in FIG. 7, reception sensitivity and a transmission and reception success rate of a signal may be reduced according to change in a surrounding environment condition, such as communication interference from another product and addition of a wall structure, or the quality of communication may be degraded, for example, occurrence of a communication error.

In this case, the fourth unit with a degraded quality of communication may transmit a notification signal for notifying the start of a wireless signal auto tuning process to the units belonging to the particular groups in S820.

The fourth unit may broadcast the notification signal a predetermined number of times.

The fourth unit may notify nearby products of the re-start of the auto tuning process in a broadcast manner, and adjust signal strength again.

The fourth unit may tune signal strength in S830. Tuning signal strength may include measuring reception sensitivity and a transmission and reception success rate of a signal by changing signal strength of the wireless signal transmitted by a unit, and determining signal strength for use in wireless communication based on the measurements.

For example, the fourth unit may measure reception sensitivity and a transmission and reception success rate of a signal by communicating with units belonging to the particular group while increasing strength of the signal by one level at a time.

In addition, if the reception sensitivity and the transmission and reception success rate, which are measured by the fourth unit, satisfy a predetermined standard, the fourth unit may determine that signal strength corresponding to a level right before a level satisfying the predetermined standard is signal strength for use.

The predetermined standard may be the case where the reception sensitivity and the transmission and reception success rate are greater than a reference value.

First, the fourth unit may transmit a wireless signal having signal strength greater than the current signal strength to the units belonging to the same group, and receive response signals from the unit to thereby measure reception sensitivity and a transmission and reception success rate of the signal.

If the measured reception sensitivity and the measured transmission and reception success rate are equal to or smaller than the reference value, the fourth unit may transmit a signal having increased signal strength, receive response signals responsive to the signal, and measure reception sensitivity and a transmission and reception success rate of the signal.

In addition, the fourth unit may increase signal strength until the reception sensitivity and the transmission and reception success rate become greater than the reference value. The fourth unit may determine that signal strength at which the reception sensitivity and the transmission and reception success rate are greater than the reference value is signal strength for use.

According to an embodiment of the present invention, if the communication quality is degraded to a predetermined level or lower, it is possible to increase signal strength by one level at a time until the communication quality reaches to the predetermined level. In addition, by using signal strength at a level where the satisfied communication quality is achieved, it is possible to adjust a wireless communication range of a corresponding unit to a minimum range which interference in wireless communication is minimized.

In addition, it is possible to minimize an amount of power to be used in wireless communication.

Meanwhile, the fourth unit may notify the first unit of completion of a tuning process in S840 when the tuning process is completed as signal strength for use is determined.

In this case, the fourth unit may transmit information related to the signal strength for use to the first unit in S840. For example, the fourth unit may transmit information related to the second-level signal strength, which is determined to be signal strength for use, to the first unit.

For example, the information related to the signal strength for use may include data on the determined signal strength, data on reception sensitivity, and data on a transmission and reception success rate.

In some implementations, the fourth unit may notify nearby units of completion of a tuning process in a broadcast manner.

Meanwhile, the first unit may be an outdoor unit 10. Alternatively, the first unit may be the controller 50. For example, the first unit may be a central controller.

In addition, the fourth unit may be an indoor unit 20, a remote control device such as the wired/wireless remote controller 60, or a wireless sensor 80.

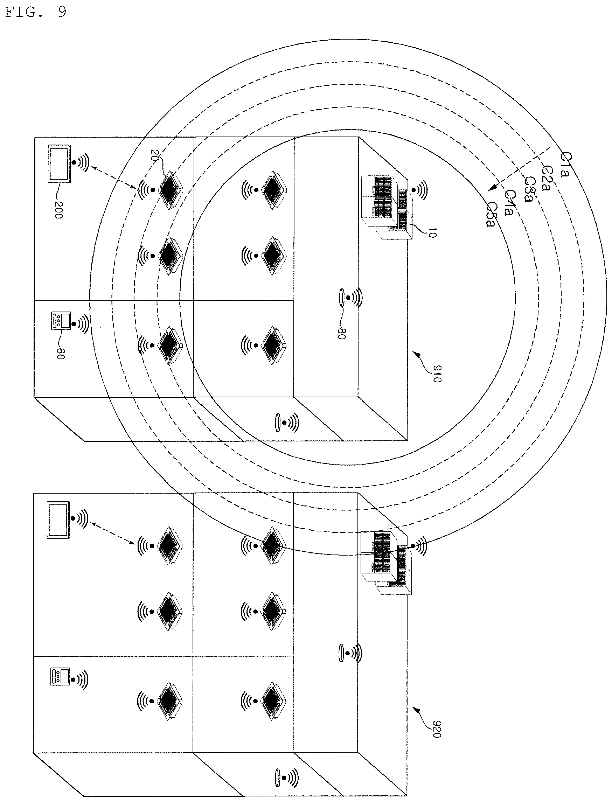

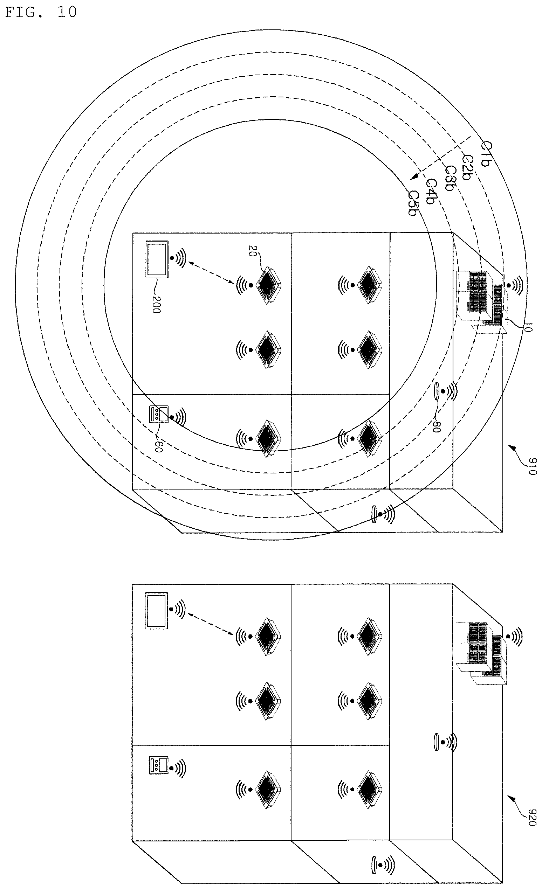

FIGS. 9 and 10 are diagrams explaining a control method of an air conditioner system according to an embodiment of the present invention, which are diagrams explaining a wireless signal auto tuning process.

The wireless signal auto tuning process may be performed after an initial communication network is constructed (after a determination that communication is working properly is made for every communication-required range.)

Referring to FIGS. 9 and 10, after an outdoor unit 10, indoor units 20, a sensor 80, a remote controller 60, and the like are installed in a predetermined building 910 and a communication network is formed in a wireless communication-required range between units, a wireless signal auto tuning process may be performed.

For example, after a communication connection is set up in a range between a predetermined outdoor unit 10 and an indoor unit grouped with the predetermined outdoor unit and in a range between a predetermined sensor 80 and the predetermined outdoor unit 10 or a predetermined indoor unit 20, a wireless signal auto-tuning process may be performed.

Alternatively, the wireless signal auto-tuning process may be performed when the quality of communication is degraded while a unit is in operation.

A master unit may allocate a time for auto-tuning an strength of a wireless signal to each slave unit, and a corresponding slave unit may automatically tune optimal signal strength by reducing signal strength of a wireless signal by one level at a time during the allocated time.

For example, the outdoor unit 10 may transmit a wireless signal auto tuning command to the indoor units 20, the wireless sensor 80, the remote controller 60, and the like.

In this case, the outdoor unit 10 may transmit a wireless signal auto tuning command to a particular unit. When completion of a tuning process is notified, the outdoor unit 10 may transmit a wireless signal auto tuning command to another unit. Accordingly, the outdoor unit 10 may control one unit at a time to perform an auto-tuning process and may allocate an auto-tuning time to each unit.

FIG. 9 shows an example in which the sensor 80 performs an auto-tuning process.

Referring to FIG. 9, the sensor 80 checks reliability of communication from default signal strength C1a, and reduce the signal strength by one level at a time.

If reception sensitivity and a transmission and reception success rate based on the default signal strength C1a are greater than a reference value, it may be determined that communication reliability is verified.

In this case, the sensor 80 may measure the reception sensitivity and the transmission and reception success rate by gradually reducing the signal strength to C2a, C3a, C4a, and C5a.

FIG. 9 is an example in which the signal intensities C1a, C2a, C3a, C4a, and C5a are visually displayed in the form of a range of a wireless communication signal, but aspects of the present invention are not limited thereto.

If reception sensitivity and a transmission and reception success rate of a signal are reduced to the reference value or smaller when the signal is at a next-level signal strength which is smaller than signal strength of a predetermined level C5a, the sensor 80 may determine that signal strength corresponding to C5a, which is a level right before a level at which the reception sensitivity and the transmission and reception success rate are reduced to the reference value or lower, is signal strength for use.

The sensor 80 may complete the tuning process when the signal strength for use is determined, and may transmit information related to the signal strength for use to the outdoor unit 10.

Meanwhile, the outdoor unit 10 may transmit the wireless signal auto tuning command to another unit.

FIG. 10 shows an example in which an indoor unit 20 performs an auto-tuning process.

Referring to FIG. 10, the indoor unit 20 may check communication reliability from default signal strength C1b, and reduce the signal strength by one level at a time.

Meanwhile, default signal strength C1a or C1b may be set to a different level depending on a type of a unit.

For example, great-level default signal strength C1b may be set for an indoor unit 20 required to communicate with an outdoor unit and another indoor unit, and thus, the indoor unit 20 may reduce the signal strength from the great level signal strength in order. In addition, in some embodiments, the default signal strength C1b may be determined depending on a required wireless communication range. Meanwhile, if reception sensitivity and a transmission and reception success rate of a signal having the default signal strength C1b are greater than the reference value, it may be determined that communication reliability is verified.

In this case, the indoor unit 20 may measure the reception sensitivity and the transmission and reception success rate by gradually reducing the signal strength to C2b, C3b, C4b, and C5b.

If reception sensitivity and a transmission and reception success rate of a signal are reduced to the reference value or smaller when the signal has signal strength of a next level C4b which is smaller than signal strength of a predetermined level C3b, the indoor unit 20 may determine that the signal strength corresponding to C3b, which is a level right before a level at which the reception sensitivity and the transmission and reception success rate are reduced to the reference value or smaller, is signal strength for use.

The indoor unit 20 may complete the tuning process when the signal strength for use is determined, and transmit information related to the signal strength for use to the outdoor unit 10.

Meanwhile, the outdoor unit 10 may transmit a wireless signal auto tuning command to another unit so that another unit performs an auto-tuning process, and may repeat the above-described procedure until all units belonging to the same group complete the auto-tuning process.

Meanwhile, while the air conditioner system is operating as the whole units complete the tuning process, there may be degradation of a quality of communication, for example, as reception sensitivity and a transmission and reception success rate are reduced or a communication error occurs according to change in a surrounding environment condition, such as communication interference from another product and addition of a wall structure.

In this case, a particular unit whose communication quality is degraded may perform an auto-tuning process while gradually increasing signal strength, thereby optimizing the signal strength again.

Take an example of the sensor 80 in FIG. 9. While the sensor 80 performs wireless communication with signal strength of a specific level C5a, the communication quality may be degraded due to change in environment.

The sensor 80 may measure the quality of communication by increasing the signal strength from the predetermined level C5a to C4a, C3a, C2a, and C1a by one level at a time.

If communication reliability is verified at a next level C4a, the sensor 80 may set signal strength of the next level C4a as signal strength for use, and complete the tuning process.

Take an example of the indoor unit 20 in FIG. 10. While the indoor unit 20 performs wireless communication with signal strength of a predetermined level C3b, the quality of communication may be degraded due to change in environment.

The indoor unit 20 may measure the communication quality by increasing the signal strength from the predetermined level C3b to C2b and C1b by one level at a time.

If communication reliability is verified at a next level C2b, the sensor 80 may set signal strength of the next level C2b as signal strength for use and complete the tuning process.

According to the present invention, when many devices are wirelessly connected in a building, an apartment, or the like, it is possible to minimize signal interference between devices installed in the same building 910 or adjacent building 920 within limited frequency resources.

According to at least one embodiment of the present invention, it is possible to set optimal signal strength at which mutual interference is prevented.

In addition, according to at least one embodiment of the present invention, it is possible to create a high-quality wireless communication environment.

In addition, according to at least one embodiment of the present invention, it is possible to provide an air conditioner system, which allows units to wirelessly communicate directly with each other regardless of an installation environment, and a control method of the system.

An electronic device (unit), a mobile terminal, and an air conditioner system according to the present invention are not limitedly applicable to the configurations and methods of the embodiments as described above. For example, all or some of the embodiments may be selectively combined to achieve various modifications.

Meanwhile, a control method of the electronic device (unit), the mobile terminal, and the air conditioner system according to the present invention may be implemented as code that can be written on a computer-readable medium in which a program is recorded and thus read by a computer. The computer-readable medium includes all kinds of recording devices in which data is stored in a computer-readable manner. Examples of the computer-readable recording medium may include a read only memory (ROM), a random access memory (RAM), a compact disk read only memory (CD-ROM), a magnetic tape, a floppy disc, and an optical data storage device. In addition, the computer-readable medium may be implemented as a carrier wave (e.g., data transmission over the Internet). Furthermore, the recording medium readable by a processor may be distributed over computer systems connected over a network, and the code readable by a processor may be stored and executed in a distributed manner.

## Claims

1. A control method of an air conditioner system comprising a plurality of units, the method comprising:
transmitting (S710), by a first unit among a plurality of units belonging to a particular group, a wireless signal auto tuning command to a second unit;
measuring, by the second unit, reception sensitivity and a transmission and reception success rate, by wirelessly communicating with units belonging to the particular group while reducing signal strength from default signal strength;
when the reception sensitivity and the transmission and reception success rate, which are measured by the second unit, satisfy the predetermined standard, determining, by the second unit, that signal strength corresponding to a level right before a level satisfying a predetermined standard is signal strength for use; and
transmitting, by the second unit, information related to the signal strength for use to the first unit;
the method further comprising:
transmitting, by the first unit, the wireless signal auto tuning command to a third unit belonging to the particular group;
measuring, by the third unit, the reception sensitivity and the transmission and reception success rate, by wirelessly communicating with units belonging to the particular group while reducing signal strength from the default signal strength by one level at a time;
when the reception sensitivity and the transmission and reception success rate, which are measured by the third unit, satisfy a predetermined standard, determining, by the third unit, that signal strength corresponding to a level right before a level satisfying the predetermined standard is signal strength for use; and
transmitting, by the third unit, information related to the signal strength for use to the first unit.

2. The control method of claim 1, wherein the units belonging to the particular group perform wireless communication using a Sub-GHz frequency band.

3. the control method of claim 1, or 2, wherein the first unit is an outdoor unit (10) or a central controller (50).

4. The control method of claim 1, 2, or 3, wherein the second unit is an indoor unit (20), a remote controller, or a wireless sensor.

5. The control method of any one of claims 1 to 4, wherein the information related to the signal strength for use comprises data on the determined signal strength, data on the reception sensitivity, and data on the transmission and reception success rate.

6. The control method of any one of claims 1 to 5, wherein the predetermined standard indicates that one of the reception sensitivity and the transmission and reception success rate is equal to or smaller than a reference value.

7. The control method of any one of claims 1 to 6, wherein the default signal strength is set to a different level depending on a type of a unit.

8. The control method of any one of claims 1 to 7, further comprising:
when a communication error occurs in a fourth unit among a plurality of units belonging to the particular group, transmitting, by the fourth unit, a notification signal for notifying a wireless signal auto tuning process to other units belonging to the particular group;
measuring, by the fourth unit, reception sensitivity and a transmission and reception success rate, by wirelessly communicating with units belonging to the particular group while increasing signal strength by one level at a time;
when the reception sensitivity and the transmission and reception success rate, which are measured by the fourth unit, satisfy a predetermined standard, determining, by the fourth unit, that signal strength of a level satisfying the predetermined standard is signal strength for use; and
transmitting, by the fourth unit, information related to the signal strength for use to a first unit belonging to the particular group.

9. The control method of claim 8, wherein the fourth unit is an indoor unit, a remote control device, or a wireless sensor.

10. The control method of claim 8 or 9, wherein the transmitting of a notification signal comprises broadcasting, by the fourth unit, the notification signal a predetermined number of times.

11. The control method of any one of claims 8 to 10, wherein the predetermined standard indicates that the reception sensitivity and the transmission and reception success rate are greater than a reference value.

## Patentansprüche

1. Steuerverfahren für ein Klimaanlagensystem, das mehrere Einheiten aufweist, wobei das Verfahren aufweist:
Senden (S710) durch eine erste Einheit unter den mehreren Einheiten, die zu einer bestimmten Gruppe gehören, eines Funksignal-Autoabstimmungsbefehls an eine zweite Einheit;
Messen durch die zweite Einheit einer Empfangsempfindlichkeit und einer Sende- und Empfangserfolgsrate durch drahtloses Kommunizieren mit Einheiten, die zu der bestimmten Gruppe gehören, während die Signalstärke von einer Vorgabesignalstärke reduziert wird;
wenn die Empfangsempfindlichkeit und die Sende- und Empfangserfolgsrate, die durch die zweite Einheit gemessen werden, den vorgegebenen Standard erfüllen, Feststellen durch die zweite Einheit, dass die Signalstärke, die einem Pegel genau vor einem Pegel entspricht, der einen vorgegebenen Standard erfüllt, eine nutzbare Signalstärke ist; und
Senden durch die zweite Einheit von Informationen, die die nutzbare Signalstärke betreffen, an die erste Einheit;
wobei das Verfahren ferner aufweist:
Senden durch die erste Einheit des Funksignal-Autoabstimmungsbefehls an eine dritte Einheit, die zu der bestimmten Gruppe gehört;
Messen durch die dritte Einheit der Empfangsempfindlichkeit und der Sende- und Empfangserfolgsrate durch drahtloses Kommunizieren mit Einheiten, die zu der bestimmten Gruppe gehören, während die Signalstärke von der Vorgabesignalstärke um jeweils einen Pegel reduziert wird;
wenn die Empfangsempfindlichkeit und die Sende- und Empfangserfolgsrate, die durch die dritte Einheit gemessen werden, einen vorgegebenen Standard erfüllen, Feststellen durch die dritte Einheit, dass die Signalstärke, die einem Pegel genau vor einem Pegel entspricht, der den vorgegebenen Standard erfüllt, eine nutzbare Signalstärke ist; und
Senden durch die dritte Einheit von Informationen, die die nutzbare Signalstärke betreffen, an die erste Einheit.

2. Steuerverfahren nach Anspruch 1, wobei die Einheiten, die zu der bestimmten Gruppe gehören, eine drahtlose Kommunikation unter Verwendung eines Sub-GHz-Frequenzbands durchführen.

3. Steuerverfahren nach Anspruch 1 oder 2, wobei die erste Einheit eine Außeneinheit (10) oder eine zentrale Steuereinrichtung (50) ist.

4. Steuerverfahren nach Anspruch 1, 2 oder 3, wobei die zweite Einheit eine Inneneinheit (20), eine Fernsteuerung oder ein drahtloser Sensor ist.

5. Steuerverfahren nach einem der Ansprüche 1 bis 4, wobei die Informationen, die die nutzbare Signalstärke betreffen, Daten über die bestimme Signalstärke, Daten über die Empfangsempfindlichkeit und Daten über die Sende- und Empfangserfolgsrate aufweisen.

6. Steuerverfahren nach einem der Ansprüche 1 bis 5, wobei der vorgegebene Standard anzeigt, dass die Empfangsempfindlichkeit oder die Sende- und Empfangserfolgsrate gleich oder kleiner als ein Referenzwert ist.

7. Steuerverfahren nach einem der Ansprüche 1 bis 6, wobei die Vorgabesignalstärke abhängig von einem Typ einer Einheit auf einen anderen Pegel eingestellt wird.

8. Steuerverfahren nach einem der Ansprüche 1 bis 7, das ferner aufweist:
wenn ein Kommunikationsfehler in einer vierten Einheit unter den mehreren Einheiten auftritt, die zu der bestimmten Gruppe gehören, Senden durch die vierte Einheit eines Ankündigungssignals zum Ankündigen eines Funksignal-Autoabstimmungsprozesses an andere Einheiten, die zu der bestimmten Gruppe gehören;
Messen durch die vierte Einheit der Empfangsempfindlichkeit und einer Sende- und Empfangserfolgsrate durch drahtloses Kommunizieren mit Einheiten, die zu der bestimmten Gruppe gehören, während die Signalstärke um jeweils einen Pegel erhöht wird;
wenn die Empfangsempfindlichkeit und die Sende- und Empfangserfolgsrate, die durch die vierte Einheit gemessen werden, einen vorgegebenen Standard erfüllen, Feststellen durch die vierte Einheit, dass die Signalstärke eines Pegels, die den vorgegebenen Standard erfüllt, eine nutzbare Signalstärke ist; und
Senden durch die vierte Einheit von Informationen, die die nutzbare Signalstärke betreffen, an eine erste Einheit, die zu der bestimmten Gruppe gehört.

9. Steuerverfahren nach Anspruch 8, wobei die vierte Einheit eine Inneneinheit, eine Fernsteuerung oder ein drahtloser Sensor ist.

10. Steuerverfahren nach Anspruch 8 oder 9, wobei das Senden eines Ankündigungssignals das Rundsenden durch die vierte Einheit des Ankündigungssignals mit einer vorgegebenen Häufigkeit aufweist.

11. Steuerverfahren nach einem der Ansprüche 8 bis 10, wobei der vorgegebene Standard anzeigt, dass die Empfangsempfindlichkeit und die Sende- und Empfangserfolgsrate größer als ein Referenzwert sind.

## Revendications

1. Procédé de commande d'un climatiseur comprenant une pluralité d'unités, ledit procédé comprenant :
la transmission (S710), par une première unité d'une pluralité d'unités appartenant à un groupe spécifique, d'une instruction de réglage automatique de signal radio à une deuxième unité ;
la mesure, par la deuxième unité, de la sensibilité de réception et d'un taux de réussite de transmission et de réception, par communication sans fil avec des unités appartenant au groupe spécifique en réduisant l'intensité du signal de l'intensité de signal par défaut;
si la sensibilité de réception et le taux de réussite de transmission et de réception mesurés par la deuxième unité satisfont à la norme prédéfinie, la détermination, par la deuxième unité, que l'intensité de signal correspondant à un niveau immédiatement antérieur à un niveau satisfaisant à une norme prédéfinie est l'intensité de signal à utiliser ; et
la transmission à la première unité par la deuxième unité d'informations relatives à l'intensité de signal à utiliser ;
ledit procédé comprenant en outre :
la transmission, par la première unité, de l'instruction de réglage automatique de signal radio à une troisième unité appartenant au groupe spécifique ;
la mesure, par la troisième unité, de la sensibilité de réception et du taux de réussite de transmission et de réception, par communication sans fil avec des unités appartenant au groupe spécifique en réduisant l'intensité du signal de l'intensité de signal par défaut d'un niveau à la fois ;
si la sensibilité de réception et le taux de réussite de transmission et de réception mesurés par la troisième unité satisfont à une norme prédéfinie, la détermination, par la troisième unité, que l'intensité de signal correspondant à un niveau immédiatement antérieur à un niveau satisfaisant à la norme prédéfinie est l'intensité de signal à utiliser; et
la transmission à la première unité par la troisième unité, d'informations relatives à l'intensité de signal à utiliser.

2. Procédé de commande selon la revendication 1, où les unités appartenant au groupe spécifique établissent une communication sans fil au moyen d'une bande de fréquence sub-GHz.

3. Procédé de commande selon la revendication 1 ou la revendication 2, où la première unité est une unité extérieure (10) ou une commande centrale (50).

4. Procédé de commande selon la revendication 1, la revendication 2 ou la revendication 3, où la deuxième unité est une unité intérieure (20), une télécommande ou un capteur sans fil.

5. Procédé de commande selon l'une des revendications 1 à 4, où les informations relatives à l'intensité de signal à utiliser comprennent des données sur l'intensité de signal déterminée, des données sur la sensibilité de réception et des données sur le taux de réussite de transmission et de réception.

6. Procédé de commande selon l'une des revendications 1 à 5, où la norme prédéfinie indique que la sensibilité de réception ou le taux de réussite de transmission et de réception est égal(e) ou inférieur(e) à une valeur de référence.

7. Procédé de commande selon l'une des revendications 1 à 6, où l'intensité de signal par défaut est réglée à des niveaux différents en fonction du type d'unité.

8. Procédé de commande selon l'une des revendications 1 à 7, comprenant en outre :
si une erreur de communication survient dans une quatrième unité d'une pluralité d'unités appartenant au groupe spécifique, la transmission, par la quatrième unité, d'un signal de notification destiné à notifier un processus de réglage automatique de signal radio à d'autres unités appartenant au groupe spécifique ;
la mesure, par la quatrième unité, d'une sensibilité de réception et d'un taux de réussite de transmission et de réception, par communication sans fil avec des unités appartenant au groupe spécifique en augmentant l'intensité de signal d'un niveau à la fois ;
si la sensibilité de réception et le taux de réussite de transmission et de réception mesurés par la quatrième unité satisfont à une norme prédéfinie, la détermination, par la quatrième unité, que l'intensité de signal d'un niveau satisfaisant à la norme prédéfinie est l'intensité de signal à utiliser ; et
la transmission, par la quatrième unité, d'informations relatives à l'intensité de signal à utiliser à une première unité appartenant au groupe spécifique.

9. Procédé de commande selon la revendication 8, où la quatrième unité est une unité intérieure, un dispositif de télécommande ou un capteur sans fil.

10. Procédé de commande selon la revendication 8 ou la revendication 9, où la transmission d'un signal de notification comprend la diffusion un nombre de fois défini du signal de notification par la quatrième unité.

11. Procédé de commande selon l'une des revendications 8 à 10, où la norme prédéfinie indique que la sensibilité de réception et le taux de réussite de transmission et de réception sont supérieurs à une valeur de référence.
